# EUROPEAN PATENT SPECIFICATION

(11) **EP 2 075 118 B1**
(45) Date of publication and mention of the grant of the patent: **22.01.2014**
(21) Application number: 08172373.6
(22) Date of filing: 19.12.2008
(51) Int. Cl.: B32B 3/18, B32B 5/14, B32B 7/02, B65D 65/40

(54) **Packaging material and method for packaging essentially cylindrical objects**
Verpackungsmaterial und Verfahren zum Verpacken von im wesentlichen zylindrischen Objekten
Matériau d'emballage et procédé d'emballage d'objets essentiellement cylindriques

(30) Priority: 27.12.2007 SE 0702886
(43) Date of publication of application: 01.07.2009
(73) Proprietor: Lamiflex AB, 611 35 Nyköping (SE)
(72) Inventor: Emde, Erich, 58339, Breckerfeld (DE); Lüftner, Thomas ThyssenKrupp Stahl AG, 44145, Dortmund (DE); Åhlund, Fred, 611 37, Nyköping (SE); Wincent, Mats, 155 31, Nykvarn (SE)
(74) Representative: Börlin, Maria

(56) References cited:
- GB-A- 1 352 747

## Description

### TECHNICAL FIELD

The present invention relates to a packing laminate and to a method for packing substantially cylindrical objects.

### BACKGROUND ART

In the packing of heavy objects which shall be able to be placed directly onto a ground surface, various techniques are used. For example, corrugated board can be placed around the object, whereby a certain protection against mechanical influence is achieved. When the object is placed on a ground surface with bumps, there is a risk, however, of the bumps penetrating the corrugated board and damaging the packed object. This risk is especially great if the object is heavy and/or has a sensitive surface.

Although the use of a harder packing material than corrugated board can give protection against bumps in the ground surface, there is the risk that the packing material per se will leave marks in the packed object. A hard packing material, moreover, is difficult to handle.

GB-A1-1352747 discloses a method of making a multi-ply thermoplastic board, for the packaging of heavy elements. The method comprises the steps of forming at least two strips of fused thermoplastic material, each of the strips having a plurality of continuous ribs on at least one surface thereof. The ribs being spaced with respect to each other across the width of each strip.

### SUMMARY OF THE INVENTION

The object of the present invention is to provide a packing laminate and a packing method by means of which the above problems are eliminated in a low-cost manner.

The object has been achieved by virtue of the present invention, which relates to a packing laminate which is configured to protect a packed object from a ground surface on which the object rests. The packing laminate comprises an upper outer layer, a distancing layer and a lower outer layer. The distancing layer is constituted by a plurality of elements arranged adjacent to one another between the two outer layers. The elements comprise an upper part-element and a lower part-element of different hardness.

That part-element of the distancing layer which has the greatest hardness protects the packed object from mechanical influence and distances the object from the ground surface on which the object rests. The part-element with lower hardness protects the packed object from the part-element with higher hardness.

The elements can be arranged at a distance apart in the longitudinal direction of the laminate. The laminate can thus be bent in the direction which is perpendicular to the longitudinal direction of the elements.

The upper part-element can be arranged above the lower part-element in a direction which is perpendicular to the plane of the laminate. The packing laminate thus offers good protection for packing objects. The upper part-element is here fixed to the upper outer layer and the lower part-element is fixed to the lower outer layer.

The outer layers can comprise Kraft paper and the two part-elements can be made of two different wood fibre materials. This gives a cost-effective, environmentally friendly packing laminate with good mechanical properties.

The object has further been achieved by a method for packing substantially cylindrical objects, in which the packing laminate described above is used as wrapping. The object is here protected against damage by the object being distanced from a ground surface or another object. That part-element of the distancing layer which has the highest hardness distances the object from the ground surface or the other object, and that part-element which has the lowest hardness protects the object from damage which may arise as a result of binding members arranged around the object or from that part-element which has the highest hardness.

One example of a field of application for the laminate is the packing of rolls of enamelled plate. Such plate is sensitive to mechanical influence from both the metal bands which are usually used to hold together the plate and from bumps in the ground surface on which the plate roll lies. Such bumps comprise loose particles, such as stones or other particles, and elevations in the ground surface itself. One example of a ground surface is constituted by a floor in an industrial premises. That part-element in the distancing layer of the laminate which has the lowest hardness is in this case expediently facing towards the enamelled plate. The harder part-element is hence facing towards the metal band and distributes the binding forces from the band over a larger contact area between the laminate and the roll. Without the part-element with the lower hardness, there would here be a risk of the outer edges of the packing elements having damaged the enamelled plate by leaving impressions in its surface. As a result of the arrangement of the part-element with the lower hardness, the soft part-element, on the inside of the harder part-element, pressure damage of this type is avoided. In the same way, the plate is protected from damage resulting from bumps in the ground surface, in which bumps end up directly below the region of the packing laminate. With a view to avoiding damage from bumps in the ground surface, in which bumps end up below the plate roll but outside the region of the laminate, the laminate also has the function of spacing the plate roll a distance away from the ground surface.

Hence, those parts of the surface of the roll which are not covered by the packing laminate are also protected from bumps in the ground surface, provided that the particular distance exceeds the height of the bumps.

The packing laminate can also be used in the packing of other shaped objects. The laminate is also particularly suitable in packing objects which should be distanced from a ground surface or from another object.

### DESCRIPTION OF THE FIGURES

The present invention is described in greater detail below with reference to the appended figures and embodiments of the invention. In the figures:
- Figure 1: shows a packing laminate according to the invention in perspective view,
- Figure 2: shows an exploded diagram of the laminate with the integral components,
- Figure 3: shows a side view of the laminate in the flat state, and
- Figure 4: shows an example of an application of the present invention.

### DESCRIPTION OF EMBODIMENTS

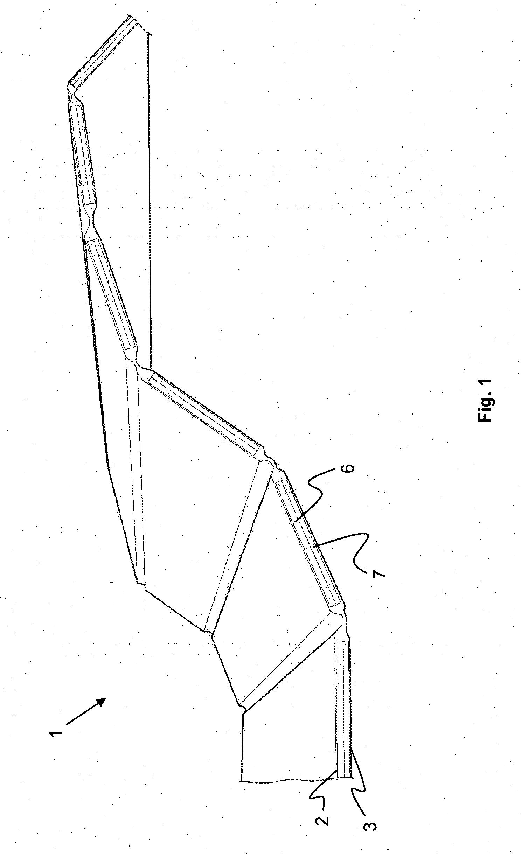

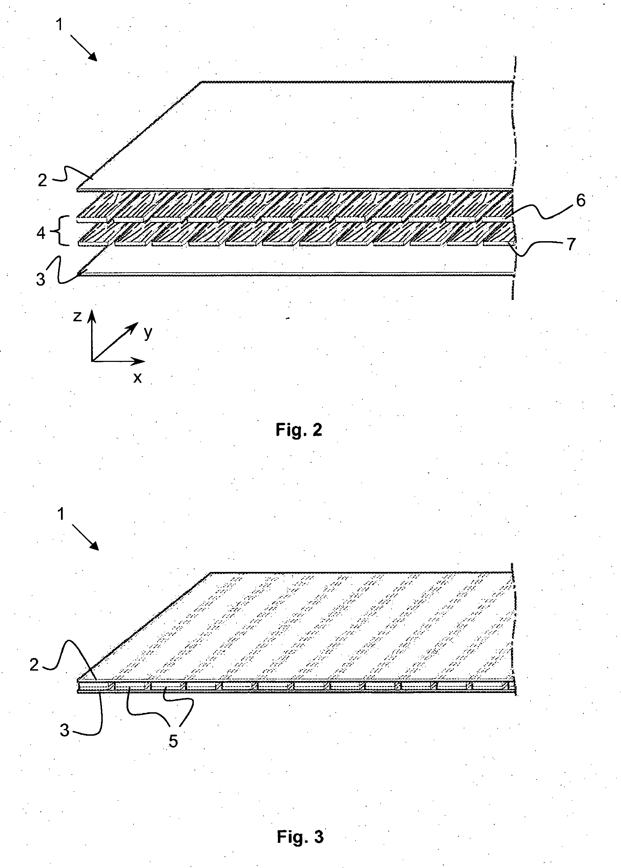

Figure 2 shows the components integral to the packing laminate 1, according to one embodiment. Uppermost in Figure 2 an upper outer layer 2 is shown, and lowermost a lower outer layer 3 is shown. Between the upper outer layer 2 and the lower outer layer 3 a distancing layer 4 is shown, the function of which is to keep the two outer layers 2, 3 at a vertical (z-direction) distance apart. In Figure 3, it is illustrated how the distancing layer 4 comprises a plurality of elements 5 which are arranged side by side at a distance apart in the longitudinal extent (x-direction) of the laminate. The longitudinal extent (x-direction) of the laminate 1 is here defined as the direction transversely to the longitudinal direction of the elements 5 of the distancing layer 4. As a result of the mutual spacing of the elements 5 of the distancing layer 4, the packing laminate 1 is flexible about an axis (y) in the plane (xy) of the laminate 1, see Figure 1.

Figure 1 shows a strip of the packing laminate according to the invention in perspective view. As a result of the laminate having been bent, the outer layers 2, 3 have here come closer together in the regions between the respective elements 5 in the distancing layer. In other words, the respective outer layers 2, 3 have been pressed in towards the centre plane of the laminate. Directly following production, however, the laminate has a cross section corresponding to that which is illustrated in Figure 3, i.e. all of the integral layers 2, 3, 4 are flat.

The two outer layers 2, 3 can be made of some form of paper, for example Kraft paper, which offers high strength. Alternatively, the layers can consist of plastic, which gives better damp resistance and makes the packing laminate less inclined to suck up oil, for example. A suitable embodiment of the layers is constituted by Kraft paper coated on one or both sides with plastic, such as polyethylene. Additional reinforcement in the form of armouring with fibre mesh can also be applied. This mesh can consist of glass fibre and can be arranged between a paper layer and a plastics layer, or can be arranged within either of these layers. A woven fabric can be used instead of a mesh. The paper can also contain a corrosion inhibitor for protecting packaged goods against corrosive attack. Examples of suitable corrosion inhibitors are RPC (Rust Preventing Chemical) and VCI (Volatile Corrosion Inhibitor).

Different materials can be used for the respective outer layers 2, 3 in one and the same packing laminate 1. The upper outer layer 2, which is here intended to be facing a packaged product, can consist of Kraft paper, Kraft paper with a corrosion inhibitor, or plastic-coated Kraft paper. The lower outer layer 3 can consist of a UV-stabilized water-repellent paper/Kraft paper, or a plastic such as polyethylene or polypropylene.

Polyethylene and polypropylene constitute suitable materials for the two outer layers 2, 3, since these plastics materials are cost-effective, have good strength properties and do not suck up fluids such as oil.

The different layers 2, 3 and the part-elements 6, 7 are expediently held together by glue. Between the outer layers 2, 3 and the distancing layer 4, conventional hot-melt adhesive, for example, can be used. Hot-melt adhesive has proved suitable, since it has a short setting time. Between the respective part-elements 6, 7 which constitute the distancing layer 4, a water-based wet adhesive can instead be used. The wet adhesive gives good adhesion and is relatively easy to apply. The longer setting time is not as critical in this case, since the packing laminate 1 in its entirety can be handled as soon as the adhesive between the outer layers 2, 3 and the distancing layer 4 has set.

The packing laminate can be continuously produced in any chosen length (x-direction). The width (y-direction) can be matched to user requirements. A packing laminate with relatively large width, around 6000 mm, can here be produced, which can then be cut into narrower strips according to user requirements. Alternatively, the packing laminate is produced directly in the required width. The thickness (z) of the laminate can also be adjusted through different choices of the respective thicknesses of the part-elements 6, 7.

The elements 5 of the distancing layer, which are arranged between the two outer layers 2, 3, comprise two part-elements 6, 7 arranged vertically (z-direction) one above the other. The first part-element 6, here the upper one, is made of a material which has lower hardness than the second part-element 7, here the lower one. Fibreboards constitute a suitable material for both the harder and the softer part-element. Such wood fibre material is environmentally friendly and cost-effective.

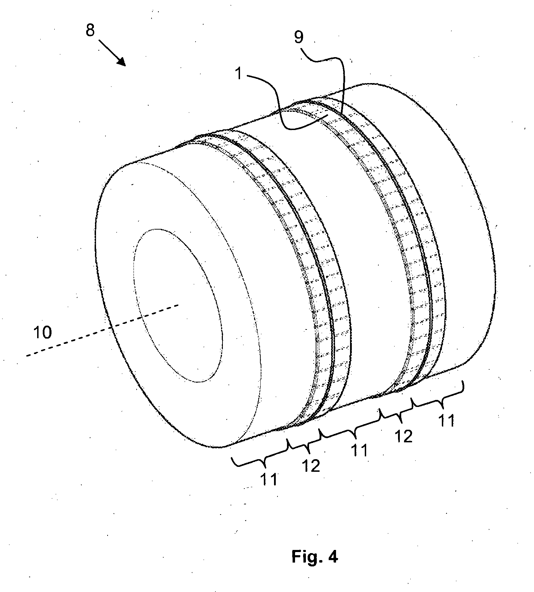

The packing laminate 1 can be used, for example, in the packing of plate rolls 8, as is shown in Figure 4. Such rolls 8 usually weigh 15-20 tonnes, typically have a length of 800-1800 mm and a diameter of around 900-1900 mm. A roll of this type is held together by a pair of steel bands 9, which are arranged at a distance apart along the longitudinal axis 10 of the roll. Binding bands or the like of other materials can also be used. Arranged radially between the roll 8 and the respective steel bands 9 are strips of the packing laminate 1 according to the invention. The width of the strips expediently measures around 150 mm. The packing laminate can also have such a width that only one strip is used, in which case both metal bands are arranged on this strip.

In the packing of such plate rolls 8, the harder part-element 7 is expediently made of a hard fibreboard, so-called hardboard, for example, whilst the softer part-element 6 is made of a porous fibreboard, so-called softboard, for example. A medium-hard fibreboard, so-called MDF, for example, may also be used for the harder part-element 7. Such fibreboards are produced by suspending wood fibres in water and then subjecting the mixture to high pressure and high temperature for a certain period. Depending on various parameters and possible additives in the production, fibreboards of different density and hardness can be realized. The harder part-element 7 which is used in the present invention has a density of at least 800 kg/m³, whilst the density of the softer part-element 6 lies below 350 kg/m³, preferably around 270 kg/m³. The softer part-element 6 is compressible and can be compressed to 50-70% of its original thickness, whilst the harder part-element 7 essentially cannot be compressed at all. The distancing layer of the packing laminate comprises two part-elements 6, 7 arranged one on top of the other, in which the density of one part-element 7 is about 3 times as large as the density of the other part-element 6. An appropriate working of the packing laminate is obtained if the ratio between the density of the different part-elements is between 1.5 and 3.5, or preferably between 2.5 and 3.5.

The elements 5 of the distancing layer 4 can have a width, for example, in the longitudinal direction (x-direction) of the laminate, within the range 40-80 mm, preferably 50-70 mm. Most expedient is a width of 60 mm for the elements 5. Furthermore, the distance (x-direction) between two adjacent elements 5 of the distancing layer 4 is expediently 3-10 mm, most preferably 4-6 mm. The most appropriate distance between the elements 5 is 5 mm. The ratio of the distances between the adjacent elements 5 and the width of the elements here lies within the range 3.75-25%, most preferably within the range 6-10%, and most expediently the ratio is 8.3%. Such a ratio ensures that the packing laminate is ductile, that is to say has good flexibility about the axis (y) transversely to its longitudinal extent, at the same time as the elements 5 of the distancing layer 4 cover a large area of the plate roll 8.

In the present embodiment, the distancing layer 4, when free from load, has a combined thickness of 9 mm. Of this, the harder part-element constitutes 3 mm and the softer part-element 6 mm. The harder part-element 7 hence constitutes 33% of the thickness of the distancing layer, whilst the softer part-element 6 constitutes 67%. A good protection for the packed plate roll 8 is thereby ensured.

When the plate roll 8 with its packing material 1, 9 is placed on the side as illustrated in Figure 4, that is to say with its longitudinal axis 10 parallel with the ground surface, the weight of the roll causes a compression of the respective packing laminate 1. Normally, the laminate 1 is here compressed from the original thickness of 9 mm to a thickness of about 6 mm. Broadly speaking, the whole of this change in thickness is attributable to the compression of the softer part-element 6. The thickness of the softer part-element 6 therefore decreases from 6 mm to 3 mm under the load in question. The thickness of the softer part-element thus decreases by about 50%. Without the harder part-element 7, the compression of the softer part-element 6 would result in insufficient distancing of the plate roll 8 from the ground surface. Relatively small bumps in the ground surface, which ended up in those regions 11 of the roll 8 in which the plate is not protected by the packing laminate 1, could thus damage the plate. Furthermore, bumps which have ended up in the regions 12 of the roll 8 directly below the packing material 1 would cause a high pressure per unit of area, which might also damage the plate. As a result of the harder part-element 7, which in the present case is arranged radially outside the softer part-element 6, the roll 8 is distanced sufficiently far from the ground surface. More precisely, in the present example the plate roll is distanced about 3 (compressed softboard) + 3 (non-compressed hardboard) = 6 mm from the ground surface. The surface of the roll here keeps clear of larger bumps in/on the ground surface than would be the case without the harder part-element 7. Furthermore, the harder part-element 7 ensures that bumps which end up in the regions 12 directly below the packing laminate 1 cannot exert a high pressure per unit of area against the roll 8, which pressure-equalizing effect protects the plate against damage from bumps ending up directly below the packing laminate. In the same way, that is to say through the pressure-equalizing effect, the harder part-element 7 protects the plate roll 8 from bangs where the packing laminate covers the surface of the roll 8. The packing laminate according to the invention, having two part-elements 6, 7 of different hardness and compressibility in the distancing layer 4, thus provides protection against bumps in the ground surface to the whole of the surface of the plate. In the present example, the harder part-element 7 can be said to be incompressible, whilst the softer part-element 6 is compressible. The compressibility of the harder part-element 7 is negligible by comparison with the compressibility of the softer part-element 6.

## Claims

1. Packing laminate (1) comprising an upper outer layer (2), a distancing layer (4) and a lower outer layer (3), in which the distancing layer (4) is constituted by a plurality of elements (5) arranged adjacent to one another between the upper outer layer (2) and the lower outer layer (3), **characterized in that** each of the elements (5) comprises an upper part-element (6) and a lower part-element (7), the said upper part-element (6) and the said lower part-element (7) being of different hardness.

2. Packing laminate according to Claim 1, in which the elements (5) are arranged at a distance apart in the longitudinal direction of the laminate.

3. Packing laminate according to Claim 2, in which the upper part-element (6) is arranged above the lower part-element (7) in a direction which is perpendicular to the plane of the laminate (1).

4. Packing laminate according to Claim 3, wherein the upper part-element (6) is fixed to the upper outer layer (2) and the lower part-element (7) is fixed to the lower outer layer (3).

5. Packing laminate according to Claim 4, wherein the outer layers (2, 3) comprise Kraft paper and the two part-elements (6, 7) are made of two different wood fibre materials.

6. Packing laminate according to any one of Claims 1 to 5, wherein the respective outer layer (2, 3) is glued to the respective part-element (6, 7) by means of hot-melt adhesive, and the part-elements (6, 7) are glued together by means of water-based wet adhesive.

7. Packing laminate according to any one of Claims 1 to 6, wherein, in the event of load in a direction perpendicular to the plane of the laminate (1), the greatest part of incurred deformation in this direction is attributable to the upper part-element (6).

8. Method for packing substantially cylindrical objects (8), **characterized in that** the packing laminate (1) according to Claim 1 is used as wrapping, the object (8) being protected against damage by the object being distanced from a ground surface or another object.

9. Method according to Claim 8, wherein the part-element having the highest hardness (7) is configured to distance the object (8) from the ground surface or the other object.

10. Method according to Claim 8 or 9, wherein the part-element having the lowest hardness (6) is configured to protect the object (8) from damage which can arise as a result of binding members (9) arranged around the object (8) or as a result of the part-element having the highest hardness (7).

## Patentansprüche

1. Verpackungslaminat (1) mit einer oberen Außenschicht (2), einer Distanzschicht (4) und einer unteren Außenschicht (3), wobei die Distanzschicht (4) aus mehreren Elementen (5) besteht, die zwischen der oberen Außenschicht (2) und der unteren Außenschicht (3) benachbart angeordnet sind, **dadurch gekennzeichnet, dass** jedes der Elemente (5) ein oberes Teilelement (6) und ein unteres Teilelement (7) aufweist, wobei das obere Teilelement (6) und das untere Teilelement (7) unterschiedliche Härte haben.

2. Verpackungslaminat nach Anspruch 1, in welchem die Elemente (5) in Längsrichtung des Laminats in einem Abstand voneinander angeordnet sind.

3. Verpackungslaminat nach Anspruch 2, in welchem das obere Teilelement (6) in einer Richtung, die senkrecht zur Ebene des Laminats (1) ist, oberhalb des unteren Teilelements (7) angeordnet ist.

4. Verpackungslaminat nach Anspruch 3, wobei das obere Teilelement (6) an der oberen Außenschicht (2) befestigt ist und das untere Teilelement (7) an der unteren Außenschicht (3) befestigt ist.

5. Verpackungslaminat nach Anspruch 4, wobei die Außenschichten (2,3) Kraftpapier aufweisen und die zwei Teilelemente (6,7) aus zwei unterschiedlichen Holzfasermaterialen hergestellt sind.

6. Verpackungslaminat nach einem der Ansprüche 1 bis 5, wobei die jeweilige Außenschicht (2,3) mit Hilfe eines Heißschmelzklebstoffs an dem jeweiligen Teilelement (6,7) angeklebt ist und die Teilelemente (6,7) mit Hilfe eines Nassklebstoffs auf Wasserbasis zusammengeklebt sind.

7. Verpackungslaminat nach einem der Ansprüche 1 bis 6, wobei im Falle einer Belastung in Richtung senkrecht zur Ebene des Laminats (1) der größte Teil der in dieser Richtung auftretenden Verformung das obere Teilelement (6) erleidet.

8. Verfahren zum Verpacken von im Wesentlichen zylindrischen Objekten (8), **dadurch gekennzeichnet, dass** das Verpackungslaminat (1) nach Anspruch 1 als Hülle verwendet wird, wobei das Objekt (8) gegen Beschädigung geschützt wird, indem das Objekt in Abstand von einer Bodenfläche oder einem anderen Objekt gehalten wird.

9. Verfahren nach Anspruch 8, in welchem das Teilelement, das die größte Härte hat, (7) konfiguriert ist, das Objekt (8) in Abstand von der Bodenfläche oder dem anderen Objekt zu halten.

10. Verfahren nach Anspruch 8 oder 9, in welchem das Teilelement, das die geringste Härte hat, (6) konfiguriert ist, das Objekt (8) vor Beschädigung zu schützen, die von um das Objekt (8) herum angeordneten Bindeelementen (9) oder von dem Teilelement, das die größte Härte hat, (7) hervorgerufen werden kann.

## Revendications

1. Stratifié d'emballage (1) comprenant une couche extérieure supérieure (2), une couche d'écartement (4) et une couche extérieure inférieure (3), dans lequel la couche d'écartement (4) est constituée par une multiplicité d'éléments (5) agencés côte à côte entre la couche extérieure supérieure (2) et la couche extérieure inférieure (3), **caractérisé en ce que** chacun des éléments (5) comprend un élément partiel supérieur (6) et un élément partiel inférieur (7), ledit élément partiel supérieur (6) et ledit élément partiel inférieur (7) présentant une dureté différente.

2. Stratifié d'emballage selon la revendication 1, dans lequel les éléments (5) sont agencés à une distance l'un de l'autre dans la direction longitudinale du stratifié.

3. Stratifié d'emballage selon la revendication 2, dans lequel l'élément partiel supérieur (6) est agencé au-dessus de l'élément partiel inférieur (7) dans une direction qui est perpendiculaire au plan du stratifié (1).

4. Stratifié d'emballage selon la revendication 3, dans lequel l'élément partiel supérieur (6) est fixé à la couche extérieure supérieure (2) et l'élément partiel inférieur (7) est fixé à la couche extérieure inférieure (3).

5. Stratifié d'emballage selon la revendication 4, dans lequel les couches extérieures (2, 3) comprennent du papier Kraft et les deux éléments partiels (6, 7) sont fabriqués en deux matériaux de fibres de bois différents.

6. Stratifié d'emballage selon l'une quelconque des revendications 1 à 5, dans lequel la couche extérieure respective (2, 3) est collée à l'élément partiel respectif (6, 7) au moyen d'une colle fusible à chaud, et les éléments partiels (6, 7) sont collés l'un à l'autre au moyen d'une colle humide à base d'eau.

7. Stratifié d'emballage selon l'une quelconque des revendications 1 à 6, dans lequel, dans le cas d'une charge dans une direction perpendiculaire au plan du stratifié (1), la plus grande partie de la déformation subie dans cette direction est attribuable à l'élément partiel supérieur (6).

8. Procédé pour l'emballage d'objets sensiblement cylindriques (8), **caractérisé en ce que** l'on utilise le stratifié d'emballage (1) selon la revendication 1 comme enveloppe, l'objet (8) étant protégé contre les dommages par le fait que l'objet est espacé d'une surface de sol ou d'un autre objet.

9. Procédé selon la revendication 8, dans lequel l'élément partiel ayant la plus haute dureté (7) est configuré pour espacer l'objet (8) de la surface du sol ou de l'autre objet.

10. Procédé selon la revendication 8 ou 9, dans lequel l'élément partiel ayant la plus faible dureté (6) est configuré pour protéger l'objet (8) contre des dommages qui peuvent survenir à cause d'éléments de liaison (9) agencés autour de l'objet (8) ou à cause de l'élément partiel ayant la plus haute dureté (7).
